Europäisches Patentamt

(19) **European Patent Office**

Office européen des brevets

(11) Veröffentlichungsnummer: **0 191 359**
**B1**

(12) **EUROPÄISCHE PATENTSCHRIFT**

(45) Veröffentlichungstag der Patentschrift:
15.11.89

(51) Int. Cl.⁴: **G 21 C 19/36**

(21) Anmeldenummer: **86101133.6**

(22) Anmeldetag: **29.01.86**

(54) Verfahren und Vorrichtung zur Vereinzelung von Brennstäben eines Brennelementes.

(30) Priorität: **15.02.85 DE 3505242**

(43) Veröffentlichungstag der Anmeldung:
**20.08.86 Patentblatt 86/34**

(45) Bekanntmachung des Hinweises auf die Patenterteilung:
**15.11.89 Patentblatt 89/46**

(84) Benannte Vertragsstaaten:
**BE CH DE FR GB LI SE**

(56) Entgegenhaltungen:
**EP-A-0 066 695**
**BE-A-682 592**
**LU-A-78 579**
**US-A-3 514 838**

**PROCEEDINGS OF THE TENTH CONFERENCE ON HOT LABORATORIES AND EQUIPMENT, Washington, DC, 26.-28. November 1962, Seiten 99-110, US; J.P. SIMON et al.: "EBR-II fuel dismantling equipment"**

(73) Patentinhaber: **Deutsche Gesellschaft für Wiederaufarbeitung von Kernbrennstoffen mbH, Hamburger Allee 4 Postfach 1407, D-3000 Hannover 1 (DE)**

(72) Erfinder: **Spilker, Harry, Talstrasse 3, D-3252 Bad Münder 2 (DE)**

(74) Vertreter: **König, Norbert, Dipl.- Phys. Dr., Patentanwälte Leine & König Burckhardtstrasse 1, D-3000 Hannover 1 (DE)**

## Beschreibung

Die Erfindung betrifft ein Verfahren zur Vereinzelung von Brennstäben eines Brennelementes gemäß Oberbegriff des Anspruchs 1 sowie eine Vorrichtung zur Durchführung des Verfahrens.

Ein Brennelement weist bekanntlich eine größere Zahl von Einzelbrennstäben, die aus verschlossenen, Kernbrennstoff enthaltenden Hülsenrohren bestehen, sowie eine geringere Anzahl von Steuerstabführungsrohren auf. Mit Hilfe von Abstandshaltern, die in Form eines Gitters angeordnet sind, und eines Kopfstückes und eines Fußstückes werden die Brennstäbe und Steuerstabführungsrohre in einer quadratischen Matrix angeordnet. Abgebrannte Brennelemente werden vor der Wiederaufarbeitung oder Endlagerung in dem Lagerbecken des Reaktors oder in Lagerbehältern gelagert. In der Matrixanordnung benötigen die abgebrannten Brennstäbe viel Lagerraum, so daß eine kompaktere Lagerung anzustreben ist, wozu aber die Brennstäbe vereinzelt werden müssen.

Durch die EP-A 0 066 695 ist eine Vorrichtung zur Kompaktierung abgebrannter Brennstäbe von Brennelementen bekannt, die einen Brennelementkopf aufweisen, der an Steuerstabführungsrohren angeschlossen ist. Die Brennstäbe sind durch Abstandshalter auf Abstand zueinander gehalten. Das Brennelement ist an seinem Fußstück in der Vorrichtung festklemmbar. Mit Hilfe von Innenschneideinrichtungen einer Trennvorrichtung werden die Kopfteile der Steuerstabführungsrohre abgetrennt und zusammen mit dem Kopf entfernt. Danach werden die Brennstäbe mit Hilfe einer Greifvorrichtung herausgezogen, mit der die Brennstäbe dann einer Kompaktierungsstation zugeführt werden, die Führungsrohre aufweist, die an einem Ende in einem ersten Rahmen angeordnet sind und hier die gleiche Anordnung aufweisen wie die Brennstäbe im Brennelement und in die die Brennstäbe eingeführt werden. Die Führungsrohre erstrecken sich am anderen Ende durch einen zweiten Rahmen, in dem die Führungsrohre eine kompaktere Anordnung aufweisen. Die Brennstäbe werden aus den Führungsrohren zunächst in eine Einrichtung zur weiteren horizontalen Kompaktierung geschoben und schließlich in eine Einrichtung zur vertikalen Kompaktierung. In dieser horizontal und vertikal kompaktierten Form werden die Brennstäbe dann in Behälter gefüllt. Die bekannte Vorrichtung ist relativ aufwendig. Sie beansprucht viel Raum, da zumindest zusätzlicher Raum entsprechend der Auszugslänge geschaffen werden muß. Da die Führungsrohre von einem Rahmenteil zum anderen Rahmenteil geneigt und teilweise gekrümmt verlaufen, besteht die Gefahr, daß die Brennstäbe beim Herausziehen und Einführen in diese Führungsrohre brechen.

Die US-A 2 853 625 zeigt eine Vorrichtung zum Entladen von mehreren abgebrannten, in Hüllrohren angeordneten Uranstäben aus einem Kernreaktor, der eine Lade- und Entladeseite aufweist. Die Vorrichtung besteht aus einem senkrecht und horizontal verfahrbaren Wagen mit einer Speicherkammer, die teilweise mit Wasser gefüllt ist. Der Wagen weist eine Aufnahmenase auf, die mit einem Hüllrohr ausrichtbar ist. Um die abgebrannten Uranstäbe zu entladen, werden an der Ladeseite des Reaktors neue Uranstäbe in das Hüllrohr eingeschoben, wodurch gleichzeitig die abgebrannten Uranstäbe auf der Entladeseite aus dem Hüllrohr in einen Kanal der Aufnahmenase eingeschoben werden. Das freie Ende der herausgeschobenen Uranstäbe wird von einem hydraulisch betätigten, durch die Kammer bewegten Kolben aufgenommen. Der Kanal endet in der Kammer. Sobald das Uranstabende das Kanalende erreicht hat, fällt er in die Speicherkammer. Der Vorgang wiederholt sich solange, bis die gewünschte Zahl von Uranstäben in die Speicherkammer gefallen ist. Nachteilig ist der erhöhte räumliche und auch konstruktive Aufwand, da für das Stabausdrücken ein zusätzlicher Raum benötigt wird, der mindestens der doppelten Länge der Brennstäbe entspricht. Außerdem besteht bei diesem bekannten Vereinzelungsvorgang die Gefahr, daß die Stäbe brechen beim Herausdrücken aus dem Hüllrohr bzw. dem Kanal der Aufnahmenase sowie beim Herabfallen in die Speicherkammer.

Die DE-A 2 730 723 zeigt ein Verfahren und eine Vorrichtung zur raumsparenden Beseitigung von Kanälen für radioaktive Brennmaterialien. Die leeren Metallkanäle in Form von im Querschnitt quadratischen Rohren werden mit Hilfe einer Schneideinrichtung in einem Wasserbecken an den vier Kanten aufgeschnitten so daß vier einzelne Seitenplatten entstehen, die raumsparend aufeinandergelegt in einem Behälter gelagert werden. Diese Druckschrift enthält keine Angabe darüber, wie das Brennmaterial aus den Kanälen entfernt wird.

Die DE-C 1 764 523 zeigt eine Trennvorrichtung zum Abtrennen der inerten Endbereiche eines Brennstoffelementes, um den Kernbrennstoff aus der von den inerten Endbereichen verschlossenen Hülse entfernen zu können. Die Trennvorrichtung weist eine Halterung zur Fixierung des Brennstoffelementes in waagerechter Lage sowie je eine Schneideinrichtung in Form von Bandsägen für jeden Endbereich auf. Die Halterung ist in Richtung der Bandsägen so verschiebbar, daß die Endbereiche gegen die Bandsägen gedrückt werden können und gleichzeitig abtrennbar sind. In dieser Druckschrift ist ebenfalls nicht die Entfernung des Brennstoffes aus den Hülsen beschrieben.

Die Aufgabe der vorliegenden Erfindung besteht darin, ein Verfahren und eine Vorrichtung der eingangs genannten Art so zu verbessern, daß die Entfernung der Brennstäbe aus einem Brennelement einfacher, platzsparender und ohne Bruchgefahr möglich ist. Die Vorrichtung soll außerdem in beliebiger Lage arbeiten können.

Diese Aufgabe wird verfahrensmäßig durch die Ausbildung gemäß Anspruch 1 gelöst. Eine Vorrichtung zur Lösung der Aufgabe ist im Anspruch 5 angegeben.

Durch die erfindungsgemäße Aufgabenlösung kann auf das nachteilige Ausziehen oder Ausdrücken der Brennstäbe aus einem Brennelement verzichtet werden. Die Erfindung ermöglicht die Zerlegung eines Brennelementes auf engstem Raum. Zusätzlicher Raum für die Auszieh- oder Ausdrücklänge wird nicht mehr benötigt. Die Gefahr eines Brennstabbruches ist weitestgehend beseitigt. Es entstehen beim Auftrennen des Abstandshaltergitters, abgesehen von sehr feinen Zerspanungsteilen, keine größeren Einzelteile, die besonders aufgesammelt werden müssen und den fernhantierten Arbeitsvorgang behindern können. Das Verfahren ist sicher und leicht fernhantierbar durchführbar. Die erfindungsgemäße Vorrichtung kann in horizontaler und vertikaler Anordnung eingesetzt werden. Das Verfahren und die Vorrichtung sind in Reaktoranlagen und heißen Zellen, also in nasser und trockener Umgebung einsetzbar.

Vorteilhafte und zweckmäßige Weiterbildungen der erfindungsgemäßen Aufgabenlösungen sind in den abhängigen Ansprüchen gekennzeichnet.

Die Erfindung soll nachfolgend anhand der beigefügten Zeichnung näher erläutert werden.

Es zeigt

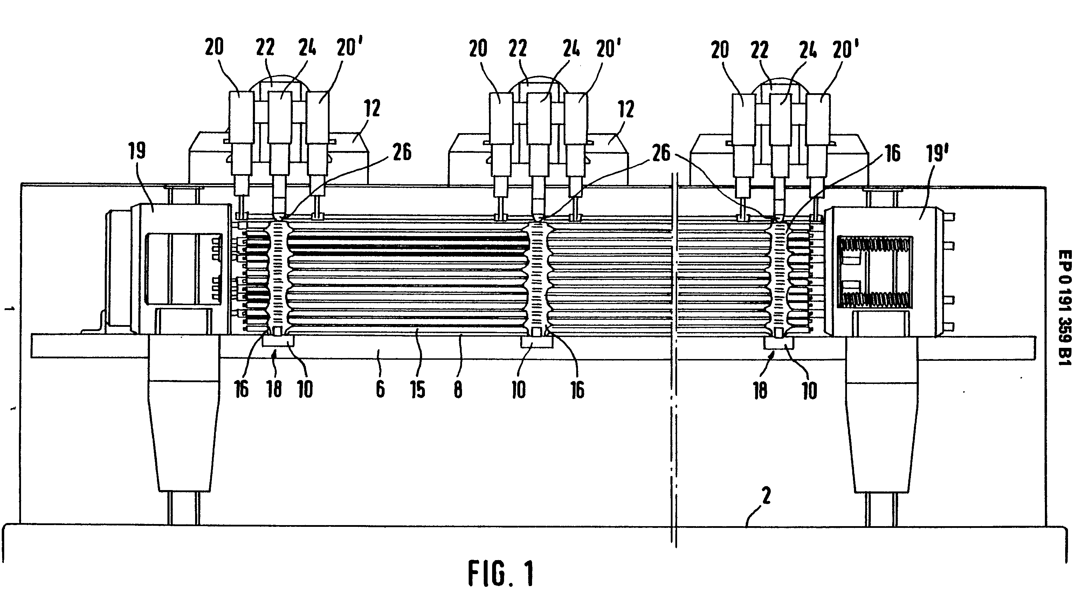

Fig. 1    eine Brennstab-Vereinzelungsvorrichtung in der Seitenansicht mit im Schnitt dargestelltem Brennelement,
Fig. 2    eine Brennstab-Vereinzelungsvorrichtung in der Vorderansicht mit im Schnitt dargestelltem Brennelement,
Fig. 3    schematisch einen Ausschnitt aus einer Abstandshalter-Gitterebene mit Brennstäben und einem Steuerstabführungsrohr.

Die in der Zeichnung dargestellte Brennstab-Vereinzelungsvorrichtung weist eine Grundplatte 2 mit einem Ständer 4 auf, an dem vertikal verfahrbar ein Auflagetisch 6 für ein Brennelement 8 angebracht ist. Das Brennelement 8 wird auf dem Auflagetisch 6 mit Hilfe von Klemmbacken 10 in definierter Position gehalten.

Am oberen Ende des Ständers 4 sind vertikal in Führungen 11 verschiedene Halterungen 12 verschiebbar angeordnet, die als Werkzeugträger dienen. Hinter dem Ständer 4 sind Antriebe 14 für die Halterungen angeordnet.

Das Brennelement 8 weist beidendig ein Fußstück und ein Kopfstück 19, 19', eine größere Zahl dazwischen angeordneter Brennstäbe 15 und eine geringere Anzahl von Steuerstabführungsrohren 15' auf, die mit Hilfe von Abstandshaltern 16, die in mehreren beabstandeten Ebenen 18 gitterartig angeordnet sind, in einer bestimmten Matrix geordnet gehalten sind. Beiderseits jeder Abstandshalterebene 18 ist ein Greifwerkzeug 20, 20' in der Halterung 12 für die Brennstäbe zu deren Fixierung in definierter Lage vorgesehen.

An einer separaten Halterung 22 zwischen den Greifwerkzeugen 20, 20' ist ein Trennwerkzeug 24 bewegbar angebracht, das am unteren Ende einen Trennscheibenkopf 26 aufweist, der um 900 schwenkbar ausgebildet ist. An der Halterung 22 des Trennwerkzeuges 24 ist ferner eine Greifzange 28 befestigt.

Die Brennstab-Vereinzelungsvorrichtung arbeitet wie folgt:

Nachdem das Brennelement 8 in der Vereinzelungsvorrichtung positioniert und mit Hilfe der Klemmbacken 10 fixiert ist, werden zunächst mit Hilfe einer Sägevorrichtung (nicht dargestellt) das Fußstück 19 und das Kopfstück 19' gleichzeitig abgetrennt, wie dies im Stand der Technik an sich bekannt ist.

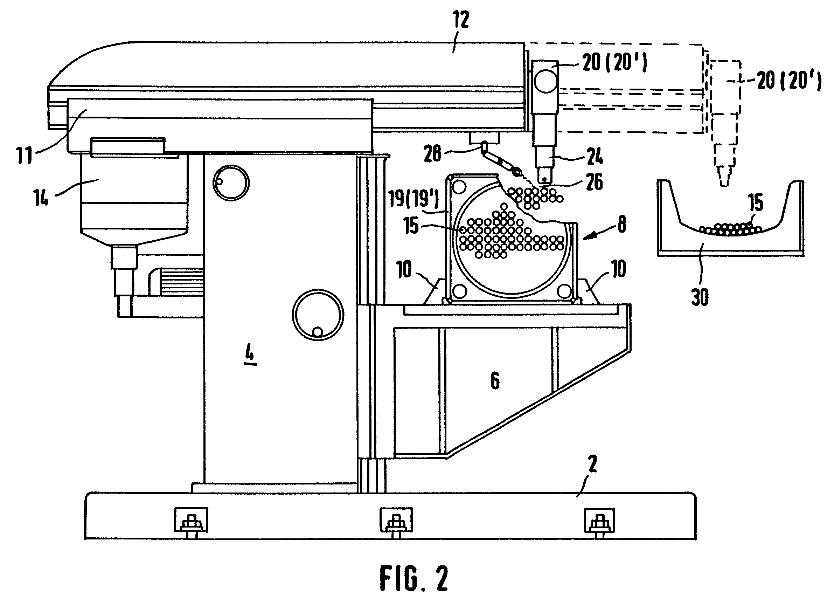

Danach wird das Brennelement lageweise wie folgt zerlegt. Mit Hilfe der Greifwerkzeuge wird in jeder Abstandshalterebene zunächst der am weitesten außen liegende Brennstab festgehalten und durch das Trennwerkzeug, das unter einem Winkel von 45° schneidet, wird dann der am weitesten außen liegende senkrechte Abstandshaltersteg des Abstandshaltergitters durchtrennt. Durch die zugeordnete Greifzange 28 wird der obere waagerechte Abstandshaltersteg gegriffen und schräg nach oben weggezogen, wie dies in der Fig. 2 dargestellt ist. Dadurch wird der nächste senkrechte Abstandshaltersteg für das Trennwerkzeug freigelegt. Nach dem Abtrennen des zweiten senkrechten Abstandshaltersteges wird durch Weiterziehen mit Hilfe der Greifzange der dritte Vertikalsteg zum Durchtrennen freigegeben. Auf diese Weise werden nacheinander sämtliche senkrechte Abstandshalterstege der ersten obersten Brennstabebene abgetrennt und kann hierdurch die gesamte horizontale Abstandshalterstruktur in der ersten Brennstabebene entfernt werden, d.h. hochgebogen werden.

Beim nächsten Arbeitsgang werden mit Hilfe der Greifwerkzeuge 20, 20' nacheinander von außen nach innen die einzelnen Brennstäbe aus dem Brennelement ausgehoben und in den Behälter 30 in kompakter Form abgelegt.

Nach dem Abarbeiten der obersten Brennstabebene beginnt der gleiche Vorgang wie oben beschrieben nacheinander für die folgenden tieferen Brennstabebenen, bis das ganze Brennelement zerlegt ist und sämtliche Brennstäbe umgesetzt sind.

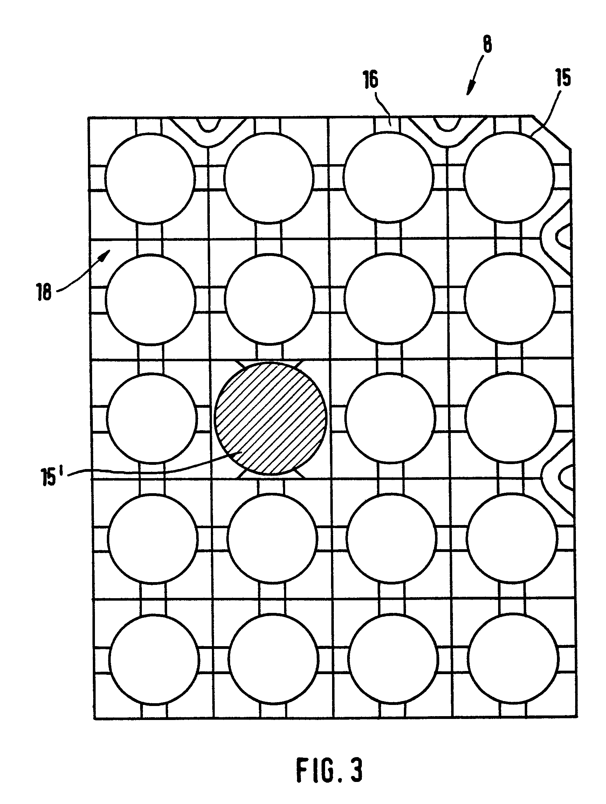

Jedes Brennelement weist, wie oben schon ausgeführt, außer den Brennstäben noch einige Steuerstabführungsrohre 32 auf, vgl. Fig. 3. Diese weisen in der Regel einen größeren Durchmesser auf als die Brennstäbe und werden aufgrund der größeren Durchmesser durch die Greifwerkzeuge 20, 20' identifiziert und in einer gesonderten Ablage abgelegt (nicht dargestellt).

Das übrigbleibende aufge bogene Abstandshaltergitter und das Fuß- und das Kopfstück werden in einer gesonderten Vorrichtung verpreßt und für die Endlagerung konditioniert (nicht dargestellt).

Die beschriebene Vereinzelungsvorrichtung kann in Reaktoranlagen und in heißen Zellen eingesetzt werden, also sowohl in nasser als auch in trockener Umgebung. Die Vereinzelungsvorrichtung kann außer in horizontaler Anordnung, wie dargestellt, auch in vertikaler Anordnung arbeiten. Die Arbeitsgänge erfolgen fernhantiert.

**Patentansprüche**

1. Verfahren zum Vereinzeln von Brennstäben eines Brennelementes, die in einer Abstandshaltergitter-Anordnung (16, 18) und zwischen einem Kopfstück (19) und einem Fußstück (19') angeordnet sind, dadurch gekennzeichnet, daß zunächst das Kopfstück (19) und das Fußstück (19') in an sich bekannter Weise abgetrennt werden, daß danach lagenweise von Brennstabebene zu Brennstabebene fortschreitend die Abstandshaltergitter-Anordnung (16, 18) aufgetrennt und von den Brennstäben (15) entfernt wird, und daß die freigelegten Brennstäbe entsprechend lagenweise aus dem Brennelement (8) aufgenommen und in eine kompaktere Konfiguration umgesetzt werden.

2. Verfahren nach Anspruch 1, dadurch gekennzeichnet, daß bei horizontaler Anordnung des Brennelementes in jeder Brennstabebene abwechselnd aufeinanderfolgend ein senkrechter Abstandshaltersteg des Abstandhaltergitters aufgetrennt und danach der zugeordnete horizontale Abstandshaltersteg zur Freigabe des nächsten senkrechten Abstandshaltersteges für den Auftrennvorgang aufgebogen wird, bis sämtliche Brennstäbe einer Brennstabebene zum Umsetzen freigelegt sind.

3. Verfahren nach Anspruch 1, dadurch gekennzeichnet, daß bei senkrechter Anordnung des Brennelementes in jeder Brennstabebene abwechselnd und aufeinanderfolgend ein horizontaler Abstandshaltersteg des Abstandshaltergitters aufgetrennt und danach der zugeordnete senkrechte Abstandshaltersteg zur Freigabe des nächsten horizontalen Abstandshaltersteges für den Auftrennvorgang aufgebogen wird, bis sämtliche Brennstäbe einer Brennstabebene zum Umsetzen freigelegt sind.

4. Verfahren nach einem der Ansprüche 1 bis 3, dadurch gekennzeichnet, daß das Auftrennen und Entfernen bzw. Aufbiegen des Abstandshaltergitters sowie das anschließende Aufnehmen und Umsetzen der Brennstäbe lagenweise von einer Brennelementseite zur anderen Brennelementseite erfolgt.

5. Vorrichtung zum Vereinzeln von Brennstäben eines Brennelementes, die in einer Abstandshaltergitter-Anordnung (16, 18) und zwischen einem Kopfstück (19) und einem Fußstück (19') angeordnet sind, mit einer Klemmvorrichtung (10) zur festen Halterung des Brennelementes und mit einer Trennvorrichtung zum Abtrennen des Kopf- und des Fußstückes, dadurch gekennzeichnet, daß ein verschiebbares Trennwerkzeug (24) zum lageweisen Auftrennen des Abstandhaltergitters (16, 18) jeder Brennstabebene und ein verschiebbar ausgebildetes Greifwerkzeug (20, 20') zur Fixierung der jeweils freizulegenden Brennstäbe in einer definierten Lage sowie zum Aufnehmen und Umsetzen der freigelegten Brennstäbe in eine kompakte Konfiguration vorgesehen sind.

6. Vorrichtung nach Anspruch 5, dadurch gekennzeichnet, daß für jede Abstandshaltergitterebene (18) ein Trennwerkzeug (24) und jeweils beiderseits des Trennwerkzeuges ein Greifwerkzeug (20, 20') vorgesehen sind.

7. Vorrichtung nach Anspruch 5 oder 6, dadurch gekennzeichnet, daß jedem Trennwerkzeug (24) eine Greifzange (28) zugeordnet ist zum Aufbiegen aufgetrennter Abstandshaltergitterteile.

8. Vorrichtung nach einem der Ansprüche 5 bis 7, dadurch gekennzeichnet, daß das Trennwerkzeug (24) an seinem Ende einen Trennscheibenkopf (26) aufweist.

9. Vorrichtung nach Anspruch 8, dadurch gekennzeichnet, daß der Trennscheibenkopf (26) um 90° schwenkbar ausgebildet ist.

10. Vorrichtung nach einem der vorhergehenden Ansprüche, dadurch gekennzeichnet, daß die Trennwerkzeuge (24), die Greifwerkzeuge (20, 20') und die Greifzangen (28) in Halterungen (12, 22) sitzen, die an einem Ständer (4) vertikal und horizontal geführt verfahrbar angeordnet sind.

11. Vorrichtung nach Anspruch 10, dadurch gekennzeichnet, daß das Trennwerkzeug (24) und die Greifzange (28) jeder Abstandshaltergitterebene (18) in einer gemeinsamen Halterung (22) angeordnet sind.

12. Vorrichtung nach Anspruch 10 oder 11, dadurch gekennzeichnet, daß die Halterungen (12, 22) durch Antriebsmittel (14) antreibbar sind, die an dem Ständer (4) angebracht sind.

13. Vorrichtung nach Anspruch 12, dadurch gekennzeichnet, daß am Ständer (4), der auf einer Grundplatte (2) befestigt ist, ein vertikal verschiebbarer Auflagetisch (6) für das Brennelement (8) angebracht ist.

14. Vorrichtung nach einem der vorhergehenden Ansprüche, dadurch gekennzeichnet, daß die Trennwerkzeuge (24) und die Greifzangen (28) zum schrittweisen und aufeinanderfolgenden Auftrennen der Stege der Abstandshaltergitter und Aufbiegen der aufgetrennten Teile des Abstandshaltergitters ausgebildet und steuerbar sind.

15. Vorrichtung nach Anspruch 14, dadurch gekennzeichnet, daß der Trennscheibenkopf (26) des Trennwerkzeuges (24) in der Arbeitsstellung geneigt zum auf zutrennenden Abstandshaltersteg angeordnet ist.

16. Vorrichtung nach Anspruch 15, dadurch gekennzeichnet, daß die Neigung des Trennscheibenkopfes (26) etwa 45° beträgt.

## Claims

1. A method of singling from a fuel element fuelrods which are arranged in a spreader grid arrangement (16, 18) between a headpiece (19) and a footpiece (19'), characterized in that first of all in a manner known in itself the headpiece (19) and the footpiece (19') are severed, that after that, layer by layer from one plane of the fuelrods to the next fuelrod plane the spreader grid arrangement (16, 18) is progressively ripped up and removed from the fuelrods (15), and that the fuelrods exposed are correspondingly taken up from the fuel element (8) layer by layer and transferred into a more compact configuration.

2. A method as in Claim 1, characterized in that in the case of a horizontal arrangement of the fuel element, in each plane of the fuelrods alternately and successively one vertical spreader stay of the spreader grid is ripped up and after that the associated horizontal spreader stay is bent up for the release of the next vertical spreader stay for the ripping-up process until all of the fuelrods of one plane of fuelrods are exposed for transfer.

3. A method as in Claim 1, characterized in that in the case of a vertical arrangement of the fuel element, in each plane of the fuelrods alternately and successively one horizontal spreader stay of the spreader grid is ripped up and after that the associated vertical spreader stay is bent up for the release of the next horizontal spreader stay for the ripping-up process until all of the fuelrods of one plane of fuelrods are exposed for transfer.

4. A method as in one of the Claims 1 to 3, characterized in that the ripping up and removal or bending up of the spreader grid as well as the succeeding taking up and transfer of the fuelrods layer by layer is effected from one side of the fuel element to the other side of the fuel element.

5. A mechanism for singling from a fuel element fuelrods which are arranged in a spreader grid arrangement (16, 18) between a headpiece (19) and a footpiece (19'), having a clamping device (10) for the rigid mounting of the fuel element and having a parting mechanism for severing the headpiece and the footpiece, characterized in that a shiftable parting tool (24) is provided for the layer by layer ripping up of the spreader grid (16, 18) in each plane of the fuelrods and a shiftably constructed gripper tool (20, 20') is provided for fixing in a definite position the fuelrods about to be exposed at any time as well as for the taking up and transfer of the exposed fuelrods into a compact configuration.

6. A mechanism as in Claim 5, characterized in that for each plane (18) of the spreader grid one parting tool (24) and on each side of the parting tool one gripper tool (20, 20') are provided.

7. A mechanism as in Claim 5 or 6, characterized in that with each parting tool (24) a pair of gripper tongs (28) is associated for bending up parts ripped from the spreader grid.

8. A mechanism as in one of the Claims 5 to 7, characterized in that the parting tool (24) exhibits at the end of it a head (26) with a cutting-off wheel.

9. A mechanism in Claim 8, characterized in that the head (26) with cutting-off wheel is made able to swing through 90°.

10. A mechanism as in one of the preceding Claims, characterized in that the parting tools (24), the gripping tools (20, 20' and the gripper tongs (28) are seated in mountings (12, 22) which are arranged on a pillar (4) and guided to be able to travel vertically and horizontally.

11. A mechanism as in Claim 10, characterized in that in each spreader grid plane (18) the parting tool (24) and the gripper tongs (28) are arranged in a common mounting (22).

12. A mechanism as in Claim 10 or 11, characterized in that the mountings (12, 22) may be driven by driving means (14) which are fitted to the pillar (4).

13. A mechanism as in Claim 12, characterized in that a vertically shiftable table (6) for supporting the fuel element (8) is fitted to the pillar (4) which is fastened to a baseplate (2).

14. A mechanism as in one of the preceding claims, characterized in that the parting tools (24) and the gripper tongs (28) are constructed and are controllable for the step by step and successive ripping up of the stays of the spreader grid and bending up of the parts ripped from the spreader grid.

15. A mechanism as in Claim 14, characterized in that the cutting-off wheel head (26) of the separator tool (24) in the working position is arranged inclined to the spreader stay which is to be ripped off.

16. A mechanism as in Claim 15, characterized in that the inclination of the cutting-off wheel head (26) amounts to about 45°.

## Revendications

1. Procédé pour séparer des barres combustibles d'un élément combustible, qui sont disposées dans un ensemble à grilles de support à écartement (16, 18) et entre une pièce de tête (19) et une pièce de pied (19'),
caractérisé en ce que la pièce de tête (19) et la pièce de pied (19') sont d'abord séparées de manière connue en soi, qu'ensuite l'ensemble à grilles de support à écartement (16, 18) est démonté progressivement par couches de plan de barre combustible à plan de barre combustible et écarté des barres combustibles (15), et que les barres combustibles dégagées sont soulevées par couches en correspondance hors de l'élément combustible (8) et déplacées dans une configuration plus compacte.

2. Procédé selon la revendication 1,
caractérisé en ce que, pour une disposition horizontale de l'élément combustible, une entretoise verticale de support à écartement de la grille de support à écartement, est démontée alternativement et successivement dans chaque plan de barres combustibles, et ensuite l'entretoise horizontale de support à écartement adjointe est dépliée pour libérer l'entretoise verticale de support à écartement suivante pour l'opération de démontage, jusqu'à ce que toutes les barres combustibles d'un plan de barres combustibles soient dégagées pour le déplacement.

3. Procédé selon la revendication 1,
caractérisé en ce que, pour une disposition verticale de l'élément combustible, une entretoise horizontale de support à écartement de la grille de support à écartement, est démontée alternativement et successivement dans chaque plan de barres combustibles, et ensuite l'entretoise verticale de support à écartement adjointe est dépliée pour libérer l'entretoise horizontale de support à écartement suivante pour l'opération de démontage, jusqu'à ce que toutes les barres combustibles d'un plan de barres combustibles soient dégagées pour le déplacement.

4. Procédé selon l'une des revendications 1 à 3,
caractérisé en ce que le démontage et l'écartement ou le repliage de la grille de support à écartement, ainsi que le soulèvement et le déplacement suivants des barres combustibles se produit par couches d'un côté de l'élément combustible à l'autre côté de l'élément combustible.

5. Dispositif pour séparer des barres combustibles d'un élément combustible, qui sont disposées dans un ensemble à grilles de support à écartement (16, 18) et entre une pièce de tête (19) et une pièce de pied (19'), avec un dispositif de serrage (10) pour le maintien ferme de l'élément combustible, et avec un dispositif de tronçonnage pour séparer les pièces de tête et de pied, caractérisé en ce qu'on prévoit un outil de tronçonnage coulissant (24) pour le démontage par couches de la grille de support à écartement (16, 18) de chaque plan de barres combustibles et un appareil de préhension (20, 20') construit coulissant pour fixer les barres combustibles à dégager respectivement dans une position déterminée ainsi que pour soulever et déplacer dans une configuration compacte les barres combustibles dégagées.

6. Dispositif selon la revendication 5,
caractérisé en ce qu'on prévoit pour chaque plan de grille de support à écartement (18), un outil de tronçonnage (24) et un appareil de préhension (20, 20') à chaque fois des deux côtés de l'outil de tronçonnage.

7. Dispositif selon la revendication 5 ou 6,
caractérisé en ce qu'une pince de préhension (28) est ajointe à chaque outil de tronçonnage (24) pour replier les parties de grille de support à écartement démontées.

8. Dispositif selon l'une des revendications 5 à 7,
caractérisé en ce que l'outil de tronçonnage (24) présente à son extrémité une tête à disque de tronçonnage (26).

9. Dispositif selon la revendication 8, caractérisé en ce que la tête à disque de tronçonnage (26) est formée pivotantede 90°.

10. Dispositif selon l'une des revendications précédentes,
caractérisé en ce que les outils de tronçonnage (24), les appareils de préhension (20, 20') et les pinces de préhension (28) sont montés dans des fixations (12, 22) qui sont disposées guidées mobiles verticalement et horizontalement sur un support (4).

11. Dispositif selon la revendication 10,
caractérisé en ce que l'outil de tronçonnage (24) et la pince de préhension (28) de chaque plan de grille de support à écartement (18) sont disposés dans une fixation (22) commune.

12. Dispositif selon la revendication 10 ou 11,
caractérisé en ce que les fixations (11, 12) peuvent être entraînées par des moyens d'entraînement (14) qui sont montés sur le support (4).

13. Dispositif selon la revendication 12,
caractérisé en ce qu'une table porte-pièce (6), coulissante verticalement, pour l'élément combustible (8) est montée sur le support (4) qui est fixé sur un socle (2).

14. Dispositif selon l'une des revendications précédentes,
caractérisé en ce que les outils de tronçonnage (24) et les pinces de préhension (28) sont conformés et commandables pour le démontage pas-à-pas et successif des entretoises de la grille de support à écartement et pour déplier les parties démontées de la grille de support à écartement.

15. Dispositif selon la revendication 14,
caractérisé en ce que la tête à disque de tronçonnage (26) de l'outil de tronçonnage (24) est, en position de travail, disposée inclinée par rapport à l'entretoise de support à écartement à démonter.

16. Dispositif selon la revendication 15,
caractérisé en ce que l'inclinaison de la tête à disque de tronçonnage (26) est d'environ 45°.

FIG. 1

EP 0 191 359 B1

FIG. 2

20 (20')

20 (20')

20 (20')

15

30

24

26

8

10

28

19 (19')

15

10

12

6

2

4

11

14

FIG. 3